# EUROPEAN PATENT SPECIFICATION

(11) **EP 1 558 538 B1**
(45) Date of publication and mention of the grant of the patent: **25.01.2017**
(21) Application number: 03747712.2
(22) Date of filing: 07.10.2003
(51) Int. Cl.: C04B 28/02

(54) **DURABLE MEDIUM-DENSITY FIBRE CEMENT COMPOSITE**
DAUERHAFTER MITTELDICHTER FASER-ZEMENT-VERBUNDWERKSTOFF
COMPOSITE DE FIBROCIMENT A DENSITE MOYENNE DURABLE

(30) Priority: 07.10.2002 US 417076 P; 31.03.2003 AU 2003901529
(43) Date of publication of application: 03.08.2005
(73) Proprietor: James Hardie Technology Limited, Dublin 2 (IE)
(72) Inventor: NAJI, Basil, Toongabbie, New South Wales 2146 (AU); MERKLEY, Donald, J., Alta Loma, CA 91737 (US); ZAMMIT, Michael, Lidcombe, New South Wales 2141 (AU); LUO, Caidian, Alta Loma, CA 91737 (US)
(74) Representative: Lenney, James Patrick
(86) International application number: PCT/AU2003/001315
(87) International publication number: WO 2004/031093

(56) References cited:
- EP-A- 1 088 800
- WO-A-01/68547
- WO-A-02/28795
- WO-A-02/28796
- WO-A-02/070425
- WO-A-02/072499
- DE-A- 3 308 917
- JP-A- 6 144 911
- JP-A- 11 099 512
- US-A- 5 482 550

## Description

### Background of the Invention

### Field of the Invention

The present invention relates to fibre reinforced cement products and methods for modifying the properties of those products for particular purposes.

### Description of the Related Art

Any discussion of the prior art throughout the specification should in no way be considered as an admission that such prior art is widely known or forms part of common general knowledge in the field.

Generally, fibre reinforced composites may be divided into three groups based on their density.

High density reinforced composites have a density range above 1.6 to about 1.9 g/cm³. These composites may be formed in a conventional fashion involving matting of fibres, catchment of slurried fines and dewatering, eg the Hatschek process followed by compression of up to 30 MPa pressure to the desired thickness.

Such high density FRC materials have high structural strength, high stiffness and a smooth finish. One particularly desired advantage of high density products is their ability to resist moisture ingress thereby retain as-manufactured physical or chemical properties in service.

Unfortunately, however, many high density FRC products do not have good handlabilty, nailability and can be difficult to score and snap. There is also a high capital and maintenance cost involved in the production technique.

Medium density FRC products with a density from about 1.2 to 1.6 g/cm³ overcome some of the difficulties mentioned above. Even though they are normally formed in a conventional fashion, eg Hatschek process, they can be produced for relatively low cost compared with high density FRC products, have improved workability, ie handleability, score-snap, nailability and provide adequate structural strength and stiffness for most applications. Further, they generally have acceptable in service performance.

Conventional medium density FRC products, however, may not generally have the same level of resistance to moisture ingress and ability to maintain in-service performance as high density products. Further, they may not provide the flat smooth surface produced on high density products without additional coating and/or sanding.

Low density fibre reinforced composites with a density of around 0.8 to 1.1g/cm³ are also formed in a conventional fashion, e.g. Hatschek and normally incorporate a density modifier.

These low density products have excellent workability, i.e. handleability, score and snap and nailability due to their low density. They provide acceptable in-service performance and have adequate stiffness.

Such low density products, however, generally have lower structural strength and stiffness. Ability to maintain physical and chemical properties in service is generally lower and once again, surface flatness could be improved. Due to the specialised formulation of most low density fibre reinforced composites, they are produced at a relative high cost.

Accordingly, it will be appreciated by persons skilled in the art that it would be useful to be able to modify the properties of a medium or low density product such that they retain their advantageous properties, eg workability relatively low cost etc, but improve other properties, eg ability to maintain as-manufactured properties, resistance to moisture ingress, structural strength and stiffness and surface flatness.

Performance in extreme climactic conditions is a particularly difficult area. For example, in many geographical locations, the FRC product may be subject tomany freeze/thaw cycles during its life. Some conventional medium density FRC material produced may suffer from delamination, softening or chipping when exposed to freeze/thaw cycles.

Loss of as-manufactured physical or chemical properties can also be triggered by internal factors such as imperfections relating to the material heterogeneity, eg air pockets, segregation of constituents. In the case of fibre reinforced composite materials, imperfections such as poor bond at the matrix-fibre interface and fibre clumping may render such materials more susceptible to loss of durability.

It is an object of the present invention to overcome or ameliorate at least one of the disadvantages of the prior art, or to provide a useful alternative.

### Summary of the Invention

In accordance with the present invention, there is provided a method of providing a low or medium density FRC product having a density of less than 1.6g/cm³, comprising the steps of:
i) providing a formulation for a low or medium density product;
ii) forming a green article from said formulation;
iii) curing said green article to form said product;
   wherein prior to step iii)
   pore size modifying agent(s) are added to the formulation such that the pore volume of the product is reduced as compared with a conventional product emanating from steps i) to iii) that has a density of over 1.6g/cm³, while maintaining a density of no greater than 1.6 g/cm³,
   wherein the reduced pore volume of the product comprises a predetermined pore size distribution obtained by chemical modification obtained by including a predetermined quantity of pore modifying components into the cementitious formulation,
   wherein the pore modifying components include lignocellulosic fibres treated with a water repellant agent and microfine silica wherein the microfine silica has a particle size of less than 10 microns,
   wherein the water repellent agent comprises a hydrophilic functional group and a hydrophobic functional group,
   wherein the lignocellulosic fibres treated with a water repellent agent are provided in a range of 2% to 4% by total weight of dry solids,
   wherein the microfine silica is provided in a range of 2% to 4% by total weight of dry solids, and
   wherein the formulation further comprises reinforcing fibres.

A method of modifying the properties of a low or medium density FRC product is described, which comprises providing the low or medium density FRC product with a predetermined pore size distribution such that in particular critical zones of said distribution, the pore volume is substantially equivalent to or less than the pore volume in a respective critical zone of a conventional high density FRC product.

The pore size distribution is obtained by chemical modification.

The pore size distribution is obtained by including a predetermined quantity of pore modifying components into the cementitious formulation. In one embodiment, the pore modifying components include lignocellulosic fibres treated with a water repellent agent and microfine silica material such as silica fume.

The present applicants have found that there are a range of properties of the low or medium density FRC product which may be altered by controlling the pore size distribution of the resultant product. They have also discovered that it is not necessary to control the entire pore size distribution but rather said distribution in critical zones, eg in the region of 1 to 10 microns mean pore diameter size and in the region of 10 to 100 microns mean pore diameter size. These regions, sometimes referred to as the fibre pore and air pore regions, are critical to some of the resultant properties of the low or medium density FRC product. The applicants have found that it is possible to provide a pore volume in these critical regions which is no greater than around 150% of the pore volume in a corresponding pore size range of a conventional high density FRC product while still maintaining a low or medium density, ie a density below about 1.6 g/cm³. The resultant product has improved properties over conventional materials and in particular improved durability in a freeze/thaw environment.

The predetermined pore sized distribution is obtained to provide improved freeze/thaw durability of the FRC product.

The predetermined pore size distribution is obtained to provide reduced propensity to carbonation or differential carbonation of the FRC product.

The present invention provides a method of modifying the properties of a low or medium density FRC article comprising adjusting the pore size distribution of the article such that over a particular pore size range, the total pore volume is no greater than about 150% of the pore volume in a corresponding pore size range of a conventional high density FRC product.

A cementitious product is described comprising a body constructed from fibre reinforced cement and having a density of no more than about 1.6 grams/cm³ wherein the product has a predetermined pore size distribution such that in particular critical zones of said distribution, the pore volume is substantially equivalent to or less than the pore volume in a respective critical zone of a conventional high density FRC product.

### Brief Description of the Drawings

The present invention will now be described by way of example only, with reference to the accompany drawings in which:
Figure 1 is a graph of the freeze/thaw performance of high-density (pressed) and medium density (unpressed) conventional FRC composites;
Figure 2 is a graph of the pore size distribution of the conventional FRC composites of Figure 1;
Figure 3 is a graphical representation of the pore volumes in respective ranges for two FRC composites and a light-pressed FRC;
Figure 4 is a graph of the freeze/thaw performance of high-density (pressed) and medium density (unpressed) conventional FRC composites and a light-pressed FRC;
Figure 5 is a graph of the pore size distribution of the FRC composite shown in Figure 4;
Figure 6 is a graph of the freeze/thaw performance of high-density (pressed) and medium density (unpressed) conventional FRC composites and an FRC composite according to the present invention, and
Figure 7 is a graph of the pore size distribution of the FRC composite of Figure 6.

### Detailed Description of the Preferred Embodiments

### Fibre reinforced cement typically comprises

i) A binder such as Portland cement, which is prepared, for instance, by adding a cure modifier such as calcium sulfate (gypsum) to a clinker prepared by firing a raw material consisting of iron oxide, quartzite, clay, and lime (CaO) at a high temperature and then pulverizing the mixture. Examples of Portland cement include early strength Portland cement, ultra-high early strength Portland cement, moderate-heat Portland cement, sulfate-resisting Portland cement, and white Portland cement. Additionally, examples of the binder other than Portland cement include blast furnace cement, silica cement, fly ash cement, and alumina cement. Range: about 10% to 60% , preferably about 20% to 50%, most preferably about 30% to 40% by total weight.
ii) Pozzolanic materials: Man-made pozzolanic materials (both amorphous and crystalline) including silica fume, microsilica, metakaolin, ground granulated blast furnace slag, and fly ash. Other naturally derived materials which, when finely divided, have been referred to as pozzolanic include pumice, perlite, diatomaceous earth, tuff, trass, etc
iii) Siliceous material (preferably crystalline), the siliceous material may be present in an amount of from about 10-80 wt %, preferably about 30-70 wt %, preferably about 40-65 wt %. Preferably the siliceous material is ground sand (also known as silica) or fine quartz although amorphous silica is also suitable. Preferably the siliceous material has an average particle size of about 1-50 microns, more preferably about 20-30 microns.
iv) Reinforcing fibres: Suitable fibrous materials capable of producing a fibre reinforced product include cellulose such as softwood and hardwood cellulose fibres, non wood cellulose fibres, asbestos, mineral wool, steel fibre, synthetic polymers such as polyamides, polyesters, polypropylene, polyacrylonitrile, polyacrylamide, viscose, nylon, PVC, PVA, rayon, glass, ceramic or carbon. (vegetable, ceramic or polymeric), ranging between about 0.1% to 15% by total weight of composite solids, preferably about 5% to 12%, most preferably about 7% to 9%. Preferably, the reinforcing fibres comprise of cellulose fibres which are unrefined/unfibrillated or refined/fibrillated cellulose pulps from various sources, including but not limited to bleached, unbleached, semi-bleached cellulose pulp. The cellulose pulps can be made of softwood, hardwood, agricultural raw materials, recycled waste paper or any other forms of lignocellulosic materials. Cellulose fibres can be made by various pulping methods. In the pulping process wood or other lignocellulosic raw materials such as kenaf, straw, and bamboo, etc., are reduced to a fibrous mass by the means of rupturing the bonds within the structures of lignocellulosic materials. This task can be accomplished chemically, mechanically, thermally, biologically, or by combinations of these treatments. When cellulose fibres are used, they are preferably refined to a degree of freeness of between about 0 and 800 Canadian Standard Freeness (CSF), more preferably about 200-500 CSF.
v) Other additives/ fillers, FRC composites can contain about 0-40 wt % of other additives such as fillers such as mineral oxides, hydroxides and clays, metal oxides and hydroxides, fire retardants such as magnesite, thickeners, colorants, pigments, water sealing agents, water reducing agents, setting rate modifiers, hardeners, filtering aids, plasticisers, dispersants, foaming agents or flocculating agents, water-proofing agents, density modifiers or other processing aids.

The fibre cement composites disclosed in preferred embodiments of the present invention may be formed from the water borne slurry by any of a number of conventional processes such as the Hatschek sheet process.

After forming, the green article may be pre-cured for a short time preferably up to about 80 hours at up to about 60 °C maximum temperature and high humidity, then it maybe cured according to one or more of the following curing regimes:
Air curing: at up to about 60 °C maximum temperature and high humidity.
Steam curing: preferably in a steam environment at up to about 90 °C maximum temperature and atmospheric pressure for about 3 to 30 hours, most preferably for less than about 24 hours.

Autoclaving, preferably in a steam pressurised vessel at about 120 to 200 °C for about 3 to 30 hours, most preferably for less than about 24 hours.

The length of time and temperature chosen for curing is dependent on the formulation, the manufacturing process and form of the article.

With conventional high density FRC composites after forming and prior to curing, the product undergoes a pressing step where high pressure, ie up to about 30 MPa is applied to the formed article to give the desired thickness and density. The intention of this pressing is to reduce porosity, minimise water ingress, enhance interlaminar bonds and increase the resistance to delamination.

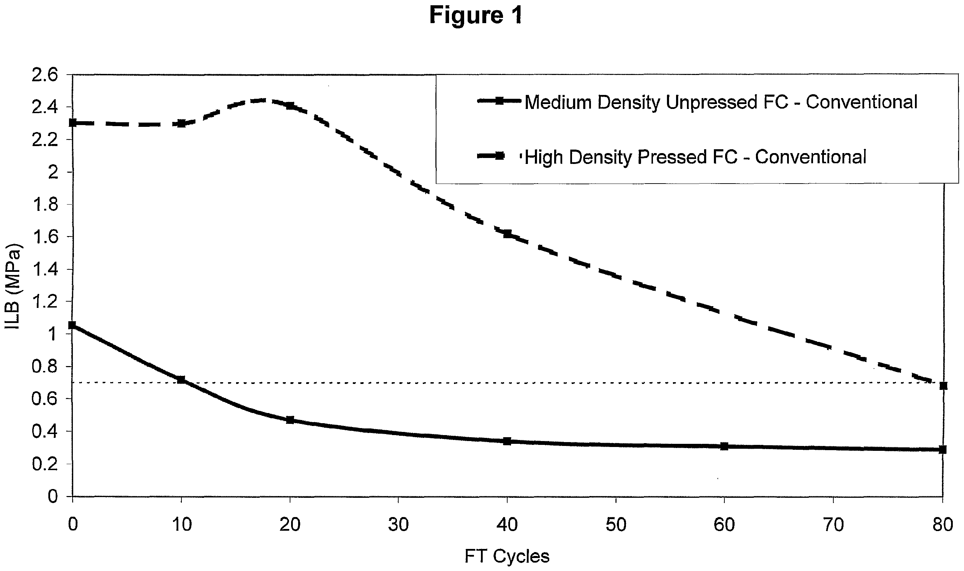

Figure 1 is a graph of a freeze/thaw cycle test comparing a conventional pressed fibre cement composite to an unpressed fibre cement composite. It can be seen that the unpressed composite exhibited significantly faster inter-laminar bond degradation (falling below 0.70 Mpa in 10 cycles) compared to a conventional high density pressed fibre composite which survives 80 cycles before it loses inter-laminar bond to the same degree..

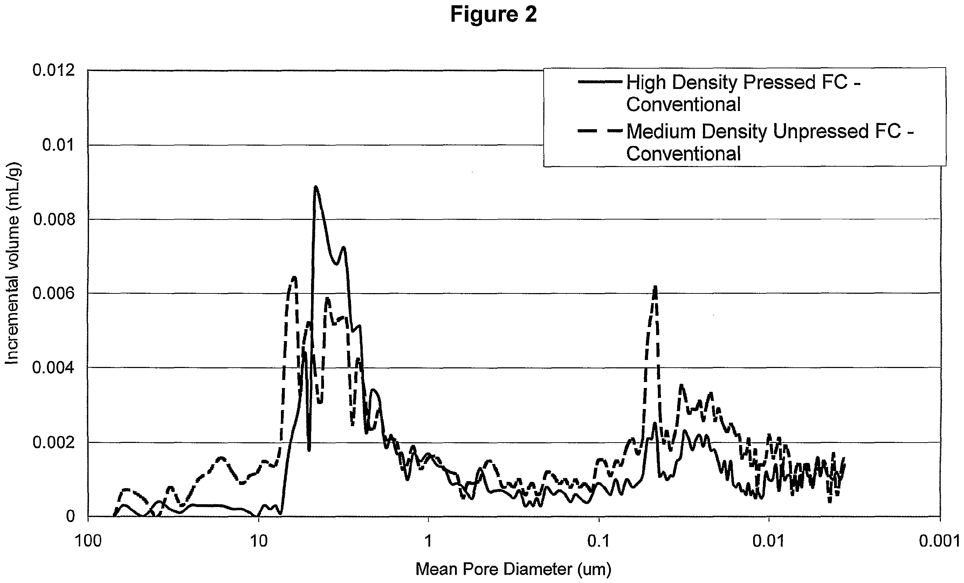

The pore size distribution of the conventional pressed and unpressed fibre cement composites are shown in Figure 2.

This pore size distribution can be broken down into five major groupings as follows.
i) Air Pores (100-10 microns). These relate to macro pores caused by poor packing, fibre clumping, dewatering etc. Sometimes they are simply referred to as cracks or interlaminar pores.
ii) Fibre Pores (10-1 microns). These relate to pores inherent in the lignocellulosic fibres specifically due to their tubular structure and straw-like shape.
iii) Meso Pores (1-0.1 microns).
iv) Capillary Pores (0.1-0.01 microns). These relate to pores originating upon depletion of free water in the matrix.
v) Gel Pores (0.01-0.001 microns). These pores relate to the cement or binder micropores and are quite small in size and difficult to modify.

The Applicants have hypothesised that the properties of the fibre cement composite, in particular durability and workability in extreme climactic conditions may be linked to the pore size distribution in the resultant article and most particularly to the pore size distribution in the 100-10 micron size range (air pores) and 10-1 micron size range (fibre pores). Examinations of prior art fibre cement composites which exhibit good durability and workability in extreme climatic conditions appears to confirm relatively low pore volume in the critical air pore (100-10 microns) and fibre pore (10-1 microns) regions. Previous techniques of high pressure pressing, using synthetic polymeric fibres or high additions of micro silica to reduce pore volumes in these regions, has, as discussed above, proved expensive or has reduced workability.

Workability is generally defined as the ease to transport, handle, cut by score and snap, fix, eg nail and install the FC composite. Generally, workability is inversely proportional to density, ie composites with a lower density generally improve workability compared to higher density ones.

However, durability is generally directly proportional to density, ie high density composites exhibit better durability compared to lower density ones. Durability is generally regarded as the ability of the fibre cement composite to resist failure and continue performance in the presence of flaws (delamination or cracks) or other forms of damage or degradation for a specified period of time under specified environmental conditions. Such degradation systems include cyclic freeze/thaw or heat/rain, premature aging, microbial or chemical attack.

Accordingly, it will be clear to a person skilled in the art that the desired attributes of workability and durability cannot be met by the simple prior art mechanism of adjusting density. Rather, the Applicant's aim is to provide an FC composite with good durability and workability by modifying the pore size distribution at least in critical zones of the distribution, while maintaining a density lower than about 1.6 g/cm³.

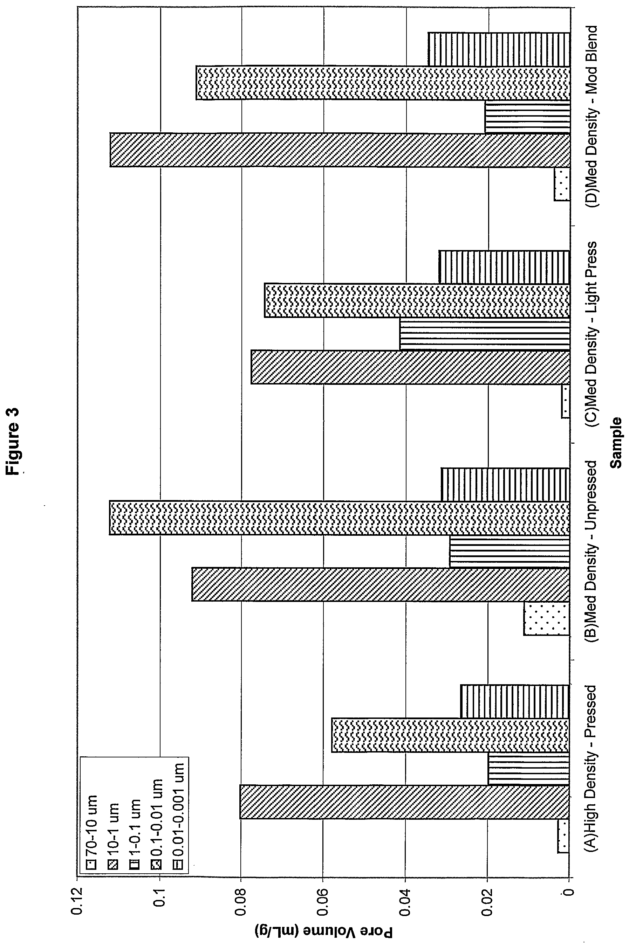

Figure 3 is a comparative of the pore volumes of a medium density composites produced according to the embodiment of the present invention, a light pressed product and two conventional products. The first conventional product (A) is a pressed high density FC composite produced using the Hatschek process and generally used in roofing applications under moderate free/thaw exposure. This article is pressed using a maximum pressure of 30 MPa with a press cycle of 15 minutes ramping and 15 minutes holding.

The second conventional product (B) is an unpressed medium density composite, once again produced via the Hatschek process and suitable for use in roofing applications in mild climatic conditions. Sample (C) is a light pressed medium density FRC composite. It can be seen from figure 3 that in the air pore range (70-10 microns) and fibre pore range (10-1 microns) the pore volume of (C) the light pressed medium density FC composite is comparable to the pore volume in the equivalent critical zone(s) of the high density product. The conventional medium density unpressed product, in the other hand, has a much higher pore volume in the air pore and fibre ranges.

Sample (D) is a medium density composite produced using a modified blend and will be discussed below under example 1 in more detail.

### Freeze/Thaw Durability

The freeze/thaw performance was tested as follows: FC Samples (44 mm x 44 mm squares) representing the three compositions were placed on one edge, half submerged in water in a plastic container, then exposed to freeze/thaw (F/T) cycling in an environmental chamber. The F/T regime consisted of 4 cycles per day; each cycle involved freezing and thawing of the sample over 6 hours including 1 hour freezing at - 20 °C and 1 hour thawing at 20 °C. The extent of degradation in the samples due to freeze/thaw exposure was determined by tensile testing in the z-direction to determine the Inter-Laminar Bond (ILB) strength (after 0, 10, 20, 40 and 80 cycles), which is a measure of the extent of delamination. A 0.7 MPa ILB limit was chosen as a lower limit measure of degradation due to freeze/thaw exposure.

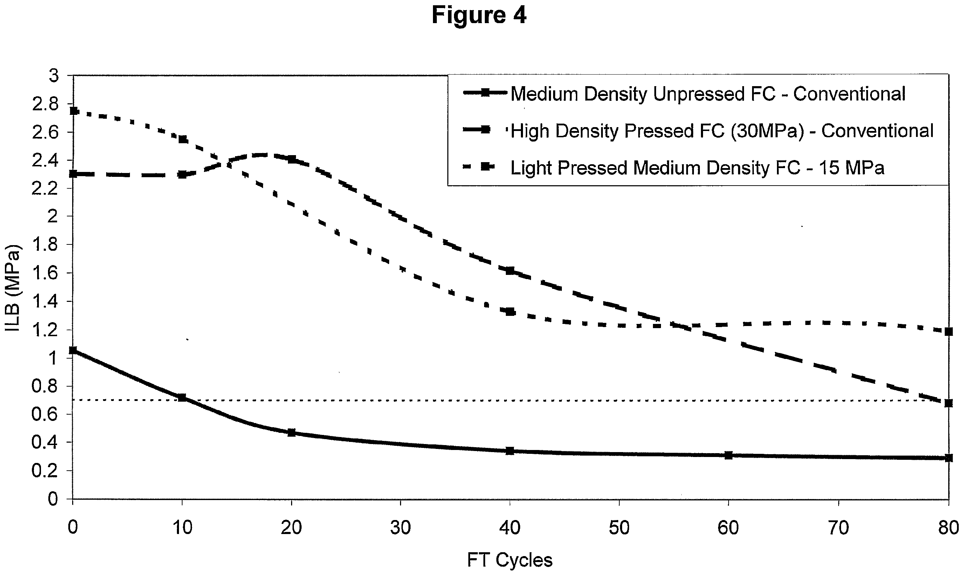

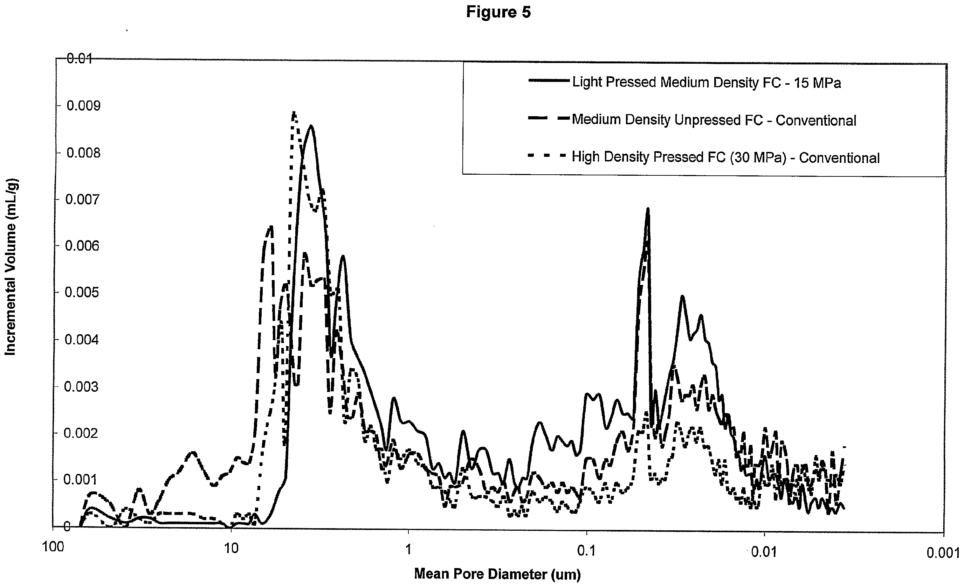

The freeze/thaw performance and pore size distributions of all 3 products are shown in Figures 4 and 5 respectively.

### Example 1- Modified Formulation/Blend FRC Composite

According to the invention the properties of a low or medium density FRC product are altered by modifying the typical FRC composite formulation. This modification involves the addition of:
i) lignocellulosic fibres chemically treated with a water repellant agent,
ii) reinforcing fibers
   and
ii) microfine silica material.

Lignocellulosic fibres chemically treated with a water repellent agent to impart hydrophobicity, range: between 2% to 4% by total weight of composite solids.

The lignocellulosic fibres as described in the preferred embodiments of the present specification is a generic term for cellulose fibres made from softwood or hardwood, bamboo, sugarcane, palm tree, hemp, bagasse, kenaf, wheat straws, rice straws, reed, and the like. Moreover, lignocellulosic fibre material is a generic term for the above fibres having such shapes as needle-like, chip-like, thin section-like, strand-like, rod-like, fibre-like, flake-like, and the like. It is to be noted that there is no particular restriction on the shape of these lignocellulosic fibres, but it is preferable that those having an average fibre length of about 0.50-50 mm, and an average fibre diameter or average fibre thickness of about 0.5 mm or less be used. Moreover, lignocellulosic fibres may be a mixture of two or more of the above fibres.

Preferably, lignocellulosic fibres comprise of cellulose fibers which are unrefined/unfibrillated or refined/fibrillated cellulose pulps from various sources, including but not limited to bleached, unbleached, semi-bleached cellulose pulp. The cellulose pulps can be made of softwood, hardwood, agricultural raw materials, recycled waste paper or any other forms of lignocellulosic materials. Cellulose fibers can be made by various pulping methods. In the pulping process wood or other lignocellulosic raw materials such as kenaf, straw, and bamboo, etc., are reduced to a fibrous mass by the means of rupturing the bonds within the structures of lignocellulosic materials. This task can be accomplished chemically, mechanically, thermally, biologically, or by combinations of these treatments.

The lignocellulosic fibres have surfaces that are at least partially treated with a water repellent agent so as to make the surfaces hydrophobic. The water repellent agent comprises a hydrophilic functional group and a hydrophobic functional group, wherein the hydrophilic group permanently or temporarily bonds to hydroxyl groups on the fiber surface in the presence of water or an organic solvent in a manner so as to substantially prevent the hydroxyl groups from bonding with water molecules. The hydrophobic group is positioned on the fiber surface and repels water therefrom.

As discussed above, the reinforcing fibres for the FC composite formulation may also be formed of cellulose. If this is the case, a portion of the cellulosic reinforcing fibres may be treated with the water repellent agent to satisfy component (i) mentioned above. Of course, if the reinforcing fibres are made from materials other than cellulose, e.g. polymer, additional treated lignocellulosic fibres are preferably added to the formulation as component (i).

In another embodiment of the invention, each water repellent agent molecule has a hydrophilic functional group comprising silanol (Si-OH) or polysilanol (Si-(OH)ₙ, where n = 2, 3 or 4) and a hydrophobic functional group comprising straight or branched alkyl chains or aromatic fragments. The silanol or polysilanol may be resulted from the hydrolysis of hydrolysable alkoxy fragments that attach to a silicon element.

The water repellent agent may be applied to the fiber surfaces using methods including vacuum deposition, pressure spraying, dipping or treating the fibres in aqueous or solvent solutions containing the water repellent chemicals.

Chemical compounds that can be used as water repellent agents include, but are not limited to:
silane derivatives of all kinds and in all formulations, alkoxylsilane of all kinds and in various formulations, silicone emulsions of all kinds and in various formulations.

The water repellent agents can be in a dry form such as powders, or wet form such as emulsions, dispersions, latexes and solutions. When multiple sizing agents are applied, some can be in dry form and others in wet form.

The water repellent agent can comprise about 50% of the dry weight of the lignocellulosic fibres, most preferably, approximately 0.01 to 10% of its weight.
The microfine silica is preferably added in the range of 2 to 4% of the total weight of dry solids. Microfine refers to the particles being essentially less than about 10 microns and preferably less than about 5 microns. Examples include silica fume which is an amorphous spherical silica by-product from the manufacture of pherosilica and silicone metal and refined natural micro silica. While crystalline silica can be used, amorphous silica is preferred and the Applicant has found that best results are achieved when the SiO₂ content in this additive is at least about 85% by weight.

Referring back to Figure 3 and Sample (D) which is a medium density FRC composite produced according to the modified formulation/blend, it can be seen that in the air pore region (70-10 microns) the total pore volume is comparable with the high density product. The fibre pore volume (10-1 micron) is greater than the high density product, however, as will be discussed below, it is a combination of pore modification and water repellent nature of the fibres which improves the properties of the modified blend FC composite.

### Test1 - Freeze/Thaw Durability (Example 1)

The freeze/thaw durability for the unpressed durable blend FC composite was tested as compared with a conventional medium density unpressed product and conventional pressed high density product.

The third composite is an unpressed medium density modified blend according to example 1 and produced via the Hatschek process.

The formulations of the three composites are shown in Table 1 below.

**Table 1: Formulations for unpressed (standard), unpressed (durable), and high density pressed composites (% by total weight)**

| **Formulation** | **Cement** | **Silica Flour** | **Component 2** | **Component 1** | | **Total Fibre Content** | **Component 3** | **Fire retardant (Filler)** |
|---|---|---|---|---|---|---|---|---|
| | | | Untreated Reinforcing Fibre (cellulose) | Treated Fibre (Cellulose) | Water Repellent Additive (Silane) | | Microfine Silica (Silica Fume) | |
| Medium density FC - Unpressed (Conventional) | 39.6 | 48.4 | 8.0 | 0.0 | 0.0 | 8.0 | 0.0 | 4.0 |
| High density FC - 30 MPa (Conventional) | 35.0 | 53.0 | 8.0 | 0.0 | 0.0 | 8.0 | 0.0 | 4.0 |
| Modified Blend Medium Density FC (Example 2) | 30.0 | 60.0 | 2.70 | 2.90 | 0.32 | 5.6 | 30. | 0.0 |

Samples representing the three composites were tested under cyclic freeze/thaw as described above. The extent of degradation in the samples due to freeze/thaw exposure was determined by tensile testing in the z-direction to determine the Inter-Laminar Bond (ILB) strength (which is a measure of the extent of delamination) after 0, 10, 20, 40 and 80 cycles.

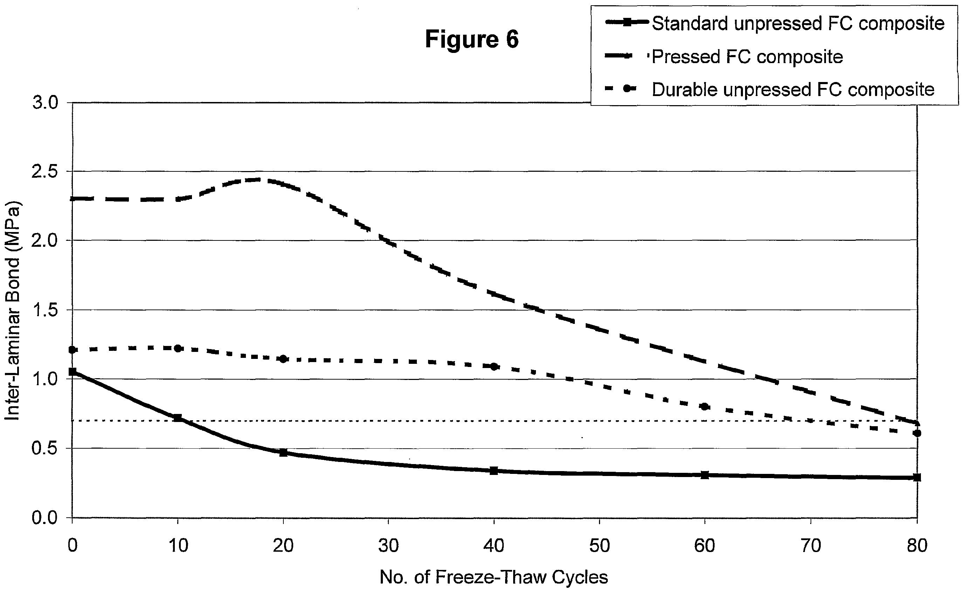

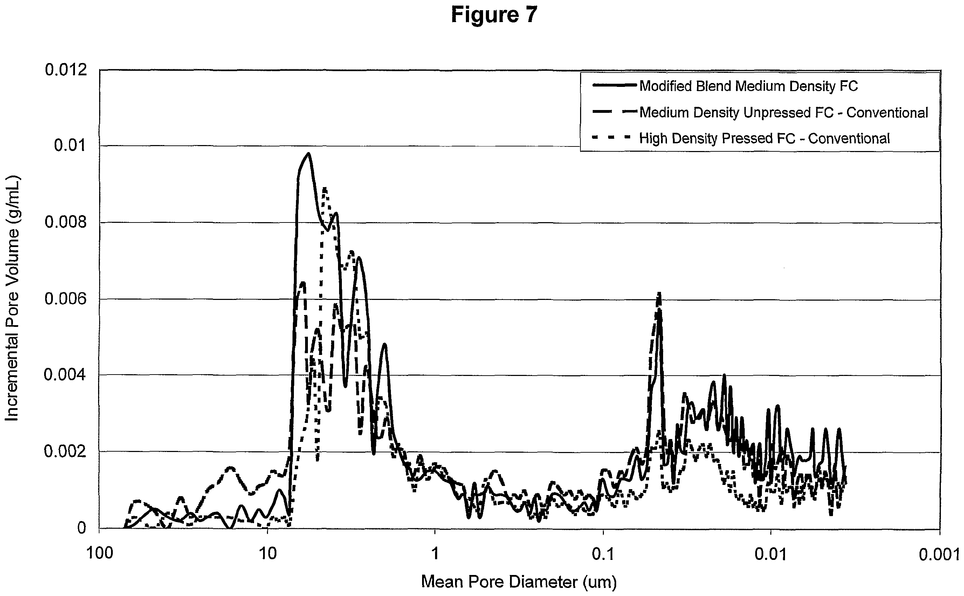

The freeze/thaw performance and pore size distributions of all 3 products are shown in Figures 6 and 7 respectively.

It can be seen that the unpressed durable blend FC composite in accordance with the preferred embodiments of the present invention provide a significant improvement in freeze/thaw durability over the conventional unpressed medium density FC composite.

Indeed, both the conventional high density FC composite and unpressed modified blend medium density composite according to the preferred embodiments of the present invention exhibit about 700% improvement in freeze/thaw durability compared to the standard FC composite. Both achieve around 70 freeze/thaw cycles above the failure line.

Turning to Figure 7, it can be seen that the conventional high density pressed FC product and modified blend FC composite according to the preferred embodiments of the present invention exhibit significantly lower porosity in the air pore zone (100-10 microns) and fibre pore zone (10-1 microns) as compared with the conventional medium density product.

The improvement in freeze/thaw durability exhibited by the modified blend FC composite according to the preferred embodiments of the present invention is surprising and quite unexpected.

Analysis of the interlaminar bond strength, capillary porosity and water absorbtivity of the modified blend FC composite according to the preferred embodiments of the present invention as well as the two conventional comparative FC composites was conducted. The results are shown in Table 2 below.

Conventional wisdom predicts that the freeze/thaw durability improvement arising from high density pressed FC products stems from the high fresh ILB (2.30 MPa) and low porosity of the densified matrix (air-dried density of 1.7 g/cm³). This is caused by the high pressure pressing of the product prior to curing. It is therefore surprising that the modified blend FC composite of the preferred embodiments of the present invention which does not undergo pressing and exhibits a low fresh ILB (1.2MPa) and high overall porosity (air-dried density of 1.3g/cm³) can match the freeze/thaw durability improvement of the conventional high density product.

In addition, since the modified blend unpressed FC composite of the preferred embodiments of the present invention would normally be lighter in weight, lower in cost and more workable, ie easier to handle and cut, than the conventional high density FC product, while at the same time exhibiting comparable durability, it presents an attractive alternative to conventional materials.

Not wishing to be bound by any particular theory, the Applicant speculates that improvement in freeze/thaw durability of the unpressed modified blend FC composite according to the preferred embodiments of the present invention, arises due to the combined synergistic effect of the hydrophobic cellulose fibres and the blocked or segmented matrix pores due to silica fume reactivity. This combination increases the resistance to moisture ingress thereby improving freeze/thaw durability.

The above explanation is supported by the water/absorption data shown in Table 2 in which the conventional high density pressed FC composite and unpressed modified blend FC composite according to the preferred embodiments of the present invention exhibit between 20 and 30% lower water absorption values compared to the conventional unpressed medium density FC product.

**Table 2: Porosities and ILB values of the three FC composites.**

| **Composition** | **Inter-Laminar Bond Strength (ILB), MPa** | **48 hour Water Absorption, % weight** |
|---|---|---|
| High Density Pressed FC | 2.30 | 26.03 |
| Convention Unpressed FC | 1.05 | 32.38 |
| Unpressed Modified Blend FC | 1.20 | 23.04 |

Figure 7 also clearly shows that a conventional high density pressed FC product and unpressed modified blend FC composite according to the preferred embodiments of the present invention which both show good freeze/thaw durability, exhibit significantly lower pore volumes in the fibre pore zone (10-1 microns) and air pore zone (100-10 microns) compared to the unpressed medium density FC composite.

### Test 2 - Moisture Resistance (Example 1)

As a further analysis, moisture resistance parameters corresponding to conventional unpressed material and the modified blend unpressed FC composite of the preferred embodiments of the present invention were assessed. The results are shown in Table 3 below.

**Table 3: Wicking height results for unpressed durable and standard FC composites.**

| **Composition** | **Wicking height after 48 hours, mm** | **Water permeation rate after 48 hours ML/hr/0.002 m²** |
|---|---|---|
| Conventional Unpressed FC | 207 | 113 |
| Unpressed Modified Blend FC | 43 | 31 |

The water permeation rate was measured on a 250 mm by 250 mm by 6 mm sample, laid flat and attached to a 100 mm high, 50 mm diameter Perspex column filled with water and monitored for extent of permeated water volume of 48 hours. Wicking height was measured on a 250 mm by 250 mm by 6 mm sample laid on edge in a flat tray in an upright position and monitored for wicking height progression over 48 hours. It can be seen that the unpressed modified blend FC composite exhibited more than about a 70% reduction in wicking height and water permeation rate compared to the conventional unpressed FC composite.

Once again, these results are quite surprising in view of conventional understanding. Water permeability may be reduced by pore filling, segmenting or pressing. Wicking on the other hand is much more difficult to control in medium density FC products which contain cellulose fibre due to their small diameter and tubular structure which promotes wicking along the fibre direction by capillary action.

It is also surprising that the low silica fume addition level in the modified blend according to the preferred embodiments of the present invention is sufficient to impart significant moisture resistance and durability improvement as compared with a conventional product. In current fibre cement technology, typical levels of silica fumes are 5 to 10%. The silica fume addition of the preferred embodiments of the present invention is around 2 to 4% and this level is generally considered to low to modify the properties of the medium density FC composite.

### Test 3 - Workability (Example 1)

The workability, handleability and nailability of the FC composite produced according to preferred embodiments of the present invention was tested. Samples representing the conventional unpressed medium density FC product and the unpressed modified blend FC product according to preferred embodiments of the present invention were subjected to flexure tests. Handleability was taken as the ultimate strain value in the B direction corresponding to a 100 mm by 200 mm by 6 mm sample tested in flexure in saturated conditions. A 5000 um/m ultimate strain value is generally considered the minimum for good handleability. Edge nailability was assessed by gun nailing at 13 mm from the edge onto a 250 mm by 250 mm by 6 mm sample and rating the extent of cracking. A numerical rating below 1 is considered very good nailability.

The results are shown in Table 4.

**Table 4: Handleability & nailability results for unpressed durable and standard FC composites.**

| **Composition** | **Ult. strain b-direction (sat. condition), um/m (*)** | **Nailability rating (13 mm from edge) (**)** |
|---|---|---|
| Conventional Unpressed FC | 9095 | 0.79 |
| Unpressed Modified Blend FC | 11433 | 0.38 |

| | | |
|---|---|---|
| (*) *minimum 5000 um*/*m for good handleability.* (**) < *1 rates : very good nailability.* | | |

It can be seen from Table 4 that the unpressed modified blend FC composite according to the preferred embodiments of the present invention exhibited very good handleability and nailability properties as compared with the conventional unpressed medium density product. Once again, these results are quite surprising since the modified blend FC composite according to the preferred embodiments of the present invention has a relatively low total fibre content, ie around 5.6% (see Table 1) as compared to 8% in standard FC composites. Such a low fibre content is outside the range commonly adopted in cellulose FC production, ie 7 to 9% and accordingly, the FC composite is expected to exhibit a very low ultimate strain value, ie brittle failure, and poor nailability.

Accordingly, it can be seen that the unpressed modified blend FC composite according to the preferred embodiments of the present invention surprisingly achieves an improvement in freeze/thaw durability (comparable with conventional high density FC composites) and at the same time maintains or improves workability (handleability and nailability improves over conventional medium density products).

The embodiments shown above provide two alternatives for modifying the properties of a low or medium density FC composite. In one embodiment, a low or medium density formulation undergoes a light press while maintaining a density lower than about 1.6 g/cm³. In the second embodiment, a modified blend is used in the original formulation.

Both embodiments show significantly improved properties over conventional medium density FC products and in particular improved freeze/thaw durability while maintaining or improving workability. The resultant products have industrial application in a wide range of areas including exterior or interior use, roofing applications, wet area FC lining, etc.

## Claims

1. A method of providing a low or medium density FRC product having a density of less than 1.6g/cm³, comprising the steps of:
i) providing a formulation for a low or medium density product;
ii) forming a green article from said formulation;
iii) curing said green article to form said product;
wherein prior to step iii)
pore size modifying agent(s) are added to the formulation such that the pore volume of the product is reduced as compared with a conventional product emanating from steps i) to iii) that has a density of over 1.6g/cm³, while maintaining a density of no greater than 1.6 g/cm³,
wherein the reduced pore volume of the product comprises a predetermined pore size distribution obtained by chemical modification obtained by including a predetermined quantity of pore modifying components into the cementitious formulation,
wherein the pore modifying components include lignocellulosic fibres treated with a water repellant agent and microfine silica wherein the microfine silica has a particle size of less than 10 microns,
wherein the water repellent agent comprises a hydrophilic functional group and a hydrophobic functional group,
wherein the lignocellulosic fibres treated with a water repellent agent are provided in a range of 2% to 4% by total weight of dry solids,
wherein the microfine silica is provided in a range of 2% to 4% by total weight of dry solids, and
wherein the formulation further comprises reinforcing fibres.

## Patentansprüche

1. Verfahren zum Bereitstellen eines FRC-Produkts mit niedriger oder mittlerer Dichte mit einer Dichte von weniger als 1,6 g/cm³, umfassend die Schritte:
i) Bereitstellen einer Formulierung für ein Produkt mit niedriger oder mittlerer Dichte;
ii) Bilden eines Grünkörpers aus der Formulierung;
iii) Härten des Grünkörpers, um das Produkt zu bilden;
wobei vor Schritt iii)
Porengröße-modifizierende(s) Mittel zu der Formulierung zugegeben wird/werden, so dass das Porenvolumen des Produkts im Vergleich zu einem bei den Schritten i) bis iii) erhaltenen herkömmlichen Produkt, das eine Dichte von über 1,6 g/cm³ aufweist, verringert ist, während eine Dichte von nicht größer als 1,6 g/cm³ erhalten wird,
wobei das verringerte Porenvolumen des Produkts eine vorbestimmte Porengrößenverteilung aufweist, erhalten durch chemische Modifikation erhalten durch Einschließen einer vorbestimmten Menge an porenmodifizierenden Komponenten in die zementhaltige Formulierung,
wobei die porenmodifizierenden Komponenten lignocellulosische Fasern, die mit einem wasserabstoßenden Mittel behandelt sind, und mikrofeines Siliciumoxid enthalten, wobei das mikrofeine Siliciumoxid eine Partikelgröße von weniger als 10 Mikrometer aufweist,
wobei das wasserabstoßende Mittel eine hydrophile funktionelle Gruppe und eine hydrophobe funktionelle Gruppe umfasst,
wobei die lignocellulosischen Fasern, die mit einem wasserabstoßenden Mittel behandelt sind, in einem Bereich von 2 % bis 4 % bezogen auf das Gesamtgewicht an trockenen Feststoffen bereitgestellt werden,
wobei das mikrofeine Siliciumoxid in einem Bereich von 2 % bis 4 % bezogen auf das Gesamtgewicht an trockenen Feststoffen bereitgestellt wird und
wobei die Formulierung ferner Verstärkungsfasern umfasst.

## Revendications

1. Procédé de fabrication d'un produit en fibrociment de basse ou moyenne densité ayant une densité inférieure à 1,6 g/cm³, comportant les étapes qui consistent à :
i) fournir une formulation pour un produit de basse ou moyenne densité ;
ii) former un article vert à partir de ladite formulation ;
iii) durcir ledit article vert pour former ledit produit ;
dans lequel, avant l'étape iii)
un ou plusieurs agents de modification de la taille des pores sont ajoutés à la formulation
de telle sorte que le volume des pores du produit soit réduit par rapport à un produit conventionnel résultant des étapes i) à iii) qui a une densité supérieure à 1,6 g/cm³, tout en maintenant une densité ne dépassant pas 1,6 g/cm³,
dans lequel le volume de pores réduit du produit comprend une distribution porométrique prédéterminée obtenue par modification chimique résultant de l'incorporation d'une quantité prédéterminée de constituants de modification des pores dans la formulation à base de ciment,
dans lequel les constituants de modification des pores comprennent des fibres lignocellulosiques traitées avec un agent hydrofuge et une silice microfine, la silice microfine ayant une taille de particule inférieure à 10 microns,
dans lequel l'agent hydrofuge comprend un groupe fonctionnel hydrophile et un groupe fonctionnel hydrophobe,
dans lequel les fibres lignocellulosiques traitées avec un agent hydrofuge sont présentes dans une quantité représentant 2 % à 4 % du poids total des solides secs,
dans lequel la silice microfine est présente dans une quantité représentant 2 % à 4 % du poids total des solides secs, et
dans lequel la formulation comprend en outre des fibres de renforcement.
